Europäisches Patentamt

European Patent Office

Office européen des brevets

(19)

(11) EP 1 544 935 A1

(12) **EUROPEAN PATENT APPLICATION**

(43) Date of publication:
  **22.06.2005 Bulletin 2005/25**

(51) Int Cl.$^7$: **H01M 10/40**, H01M 4/02

(21) Application number: **03028128.1**

(22) Date of filing: **05.12.2003**

(84) Designated Contracting States:
  **AT BE BG CH CY CZ DE DK EE ES FI FR GB GR
  HU IE IT LI LU MC NL PT RO SE SI SK TR**
  Designated Extension States:
  **AL LT LV MK**

(30) Priority: **28.01.2003 JP 2003018631**

(71) Applicant: **NISSAN MOTOR CO., LTD.
  Yokohama-shi Kanagawa-ken (JP)**

(72) Inventors:
  • **Ohsawa, Yasuhiko
    Yokosuka-shi Kanagawa-ken (JP)**
  • **Hisamitsu, Yasunari
    Yokosuka-shi Kanagawa-ken (JP)**

(74) Representative: **Schaeberle, Steffen
  Hoefer & Partner,
  Patentanwälte,
  Gabriel-Max-Strasse 29
  81545 München (DE)**

(54) **Electrode for secondary battery having gel polymer electrolyte, method of producing the same, and secondary battery**

(57)  A secondary battery electrode comprises a collector, and an active material layer formed on the collector. Further, the active material layer comprises first active material layer components including an electrode active material, binder and first polar polymer, and second active material layer components including a second polar polymer, and being placed in voids between the first active material layer components. The secondary battery electrode is used in a secondary battery having a gel polymer electrolyte.

FIG.1

EP 1 544 935 A1

**Description**

BACKGROUND OF THE INVENTION

1. Field of the Invention

The present invention relates to an electrode for a secondary battery having a gel polymer electrolyte, more particularly, the present invention relates to improvement in an active material layer in the electrode.

2. Description of the Related Art

There is increasing interest in electric vehicles and hybrid vehicles, for coping with problems of global environmental pollution and global warming. As one of these power sources, a lithium secondary battery is being widely developed.

In lithium secondary batteries, properties such as a cycle property, energy density, power density and the like are important. For example, a lithium secondary battery poor in a cycle property shows gradual decrease in charge and discharge capacity and has small life power generation amount. When a lithium secondary battery is used as a power source of vehicles, this problem is serious. The reason for this is that, in vehicles usually used for several years or more, an insufficient cycle property exerts a significant influence on reliability of vehicles. Therefore, maximum enhancement of a cycle property is desired.

As the technology for improving a cycle property of a lithium secondary battery, technologies of improving the constitution of an active material layer formed on a collector have been proposed. For example, there has been proposed a technology of improving a cycle property by using a copolymer of vinylidene fluoride and hexafluoropropylene together as a binder in an active material layer composed of an electrode active material and a binder (see, Japanese Patent Application Laid-Open No. 2000-133270).

SUMMARY OF THE INVENTION

However, a cycle property exerts a significant influence on the reliability of an apparatus equipped with a battery, and there is a desire for development of further means capable of improving a cycle property.
An object of the present invention is to provide means capable of improving the cycle property of a lithium secondary battery.

The first aspect of the present invention provides a secondary battery electrode, comprising: a collector; and an active material layer formed on the collector, the active material layer, comprising: first active material layer components including an electrode active material, a binder and a first polar polymer; and second active material layer components including a second polar polymer, the second active material layer components being placed in voids between the first active material layer components, wherein the secondary battery electrode is used in a secondary battery having a gel polymer electrolyte.

The second aspect of the present invention provides a method of producing a secondary battery electrode, comprising: applying a slurry containing an electrode active material, a binder and a first polar polymer on a collector; drying the slurry to obtain an active material layer precursor containing the electrode active material, the binder and the first polar polymer; supplying a solution containing a second polar polymer into voids in the active material layer precursor, and gelling the solution, wherein the secondary battery electrode is used in a secondary battery having a gel polymer electrolyte.

The third aspect of the present invention provides a secondary battery, comprising: a secondary battery electrode including a collector, and an active material layer formed on the collector, the active material layer, comprising: first active material layer components including an electrode active material, a binder and a first polar polymer; and second active material layer components including a second polar polymer, the second active material layer components being placed in voids between the first active material layer components, wherein the secondary battery electrode is used in a secondary battery having a gel polymer electrolyte.

The fourth aspect of the present invention provides a vehicle, comprising: a secondary battery including a secondary battery electrode having a collector, and an active material layer formed on the collector, the active material layer, comprising: first active material layer components including an electrode active material, a binder and a first polar polymer; and second active material layer components including a second polar polymer, the second active material layer components being placed in voids between the first active material layer components, wherein the secondary battery electrode is used in a secondary battery having a gel polymer electrolyte.

BRIEF DESCRIPTION OF THE DRAWINGS

The invention will now be described with reference to the accompanying drawings wherein;

FIG. 1 is a schematic cross-sectional view showing a secondary battery electrode of the present invention;
FIG. 2 is a schematic cross-sectional view showing an embodiment of a secondary battery using the electrode of the present invention;
FIG. 3 is a cross-sectional view showing a bipolar electrode using the electrode of the present invention; and
FIG. 4 is a schematic view showing a vehicle on which the secondary battery is mounted.

DETAILED DESCRIPTION OF THE PREFERRED EMBODIMENTS

Hereinafter, description will be made of embodiments of the present invention with reference to the drawings.
A first embodiment of the present invention is a secondary battery electrode equipped with a gel polymer electrolyte, having a collector and an active material layer formed on the collector, wherein the active material layer comprises first active material layer components having an electrode active material, a binder and a first polar polymer and second active material layer components having a second polar polymer, placed in voids between the first active material layer components. Here, "secondary battery electrode equipped with a gel polymer electrolyte" means that the electrode of the present invention is an electrode used in a secondary battery equipped with a gel polymer electrolyte. Therefore, the electrode of the present invention does not inevitably contain a gel polymer electrolyte in the electrode.
In general, in a lithium secondary battery, its function as the battery is demonstrated by inclusion of electrolytes such as a lithium salt and the like in an electrolyte phase. Also in the present invention, when electrolytes such as a lithium salt and the like are contained in a polar polymer in an electrode, the whole property of a battery is improved. However, even if a lithium salt is not contained in a polar polymer in an electrode at the initiation stage of producing a battery, when a lithium salt is contained in a polymer electrolyte layer as a separator in the production step before pasting of the separator and electrode, a lithium salt is diffused into a polar polymer in an electrode and, as a result, the lithium salt is contained in the polar polymer. Therefore, by using an electrode not containing an electrolyte such as a lithium salt in a polar polymer, a secondary battery can be produced in which a lithium salt is contained in a polar polymer. The electrode of the present invention may or may not contain an electrolyte such as a lithium salt.
To begin with, the construction of an electrode of the present invention will be described with reference to drawings. In the present invention, the drawings are exaggerated for convenience of explanation, however, the technological range of the present invention is not limited to embodiments shown in drawings. Also, other embodiments than those shown in drawings can be adopted.

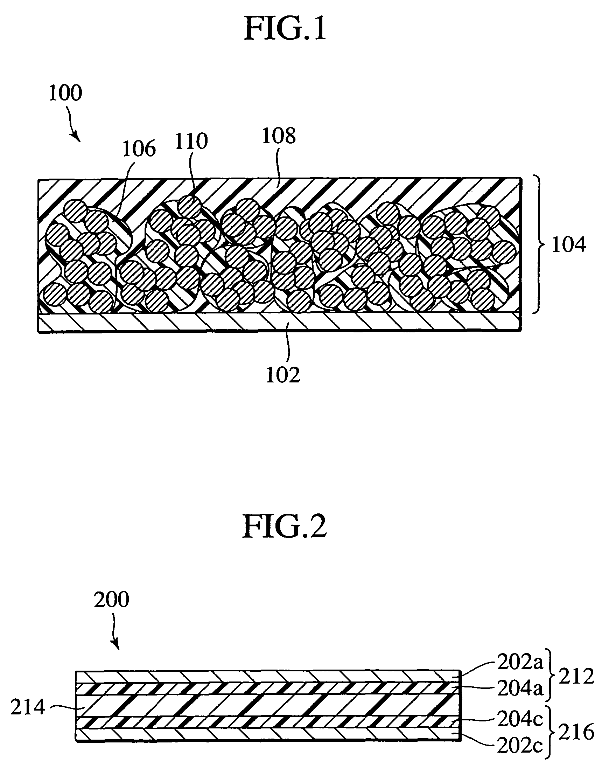

FIG. 1 shows a secondary battery electrode 100 of the present invention. On a collector 102, an active material layer 104 is formed. The active material layer 104 is constituted of first active material layer components 106 and second active material layer components 108.
The first active material layer components 106 include an electrode active material 110, a binder and a first polar polymer. The electrode active material 110 is a material effecting relatively easy impartment and reception of electrons on an electrode, and is a compound practically contributing to a charge and discharge reaction. The electrode active material is held by the binder, and an electrode structure is maintained in which an active material layer is formed on the collector. In the secondary battery electrode of the present invention, the first polar polymer is contained, in addition to a binder, in the first active material layer components in which the first polar polymer constitutes an active material layer. In such a constitution, the cycle property of a battery is improved. Further, the first polar polymer contained in first active material layer components is believed also to perform an action of ensuring ion conductivity. Therefore, in some cases, reactivity of the electrode increases and the battery property of the secondary battery can also be improved.
Though the mechanism of improvement of a cycle property by inclusion of a polar polymer is not clear, it is supposed that micro phase separation of the binder and the polar polymer in the first active material layer components affects the cycle property. In fact, it is supposed that a penetration of an electrolysis solution into the electrode active material and a function of holding the electrolysis solution near the electrode active material are improved, thus improving the cycle property of the battery. However, the technological range of the present invention is not limited to electrodes demonstrating such a mechanism. Further, in carrying out the present invention, other cycle property improving means may also be used together, of course. By using other cycle property improving means together with of the present invention, a cycle property can further be improved.
The second active material layer components 108 are components filled in voids present between the first active material layer components 106. The second active material layer components 108 include a second polar polymer. By placing the second active material layer components 108 in voids present between the first active material layer components 106, ion conductivity can be improved.

The secondary battery electrode of the present invention is applied to a secondary battery containing a gel polymer electrolyte as an electrolyte. That is, it is constituted of a polymer obtained by gelling of an electrolysis solution. The second active material layer components 108 filled between the first active material layer components 106, may be in the form of solid or gel. For improving ion conductivity in the electrode and obtaining output of a secondary battery, the second active material layer components are preferably in the form of gel. For filling the second active material layer components 108 in voids in the first active material layer components 106, a method can be adopted in which a solution containing the second polar polymer is poured into voids, and then the solution is gelled.

Next, the constitution of the secondary battery electrode of the present invention will be illustrated. The secondary battery electrode of the present invention is characterized in that the active material layer comprises first active material layer components and second active material layer components and the first polar polymer is included in the first active material layer components. There is no particular limitation on selection of collectors, electrode active materials, binders, lithium salts, conductive materials, and other compounds to be added if necessary, and appropriate compounds may be selected depending on use applications. The secondary battery electrode of the present invention can be applied to both of a positive electrode and a negative electrode.

Regarding the collector, various materials used in a lithium secondary battery can be used, and specifically, including an aluminum foil as a positive electrode collector, and a nickel foil, stainless steel foil, copper foil and the like as a negative collector. Collectors other than these may also be used. The secondary battery electrode of the present invention may be used also in a bipolar battery.

An active material layer is formed on the collector. The active material layer is a layer containing an electrode active material serving as the main charge and discharge reaction. In the present invention, the active material layer comprises first active material layer components and second active material layer components as shown in FIG. 1.

The first active material layer components include an electrode active material, a binder and a first polar polymer. The electrode active material is a material enabling charge and discharge by impartment and reception of lithium ions.

As the positive electrode active material, various positive electrode active materials such as a lithium composite oxide, a composite oxide obtained by partial substitution of a lithium composite oxide with other elements, a manganese oxide, and lithium metal can be used. Specifically, the lithium composite oxides include $LiCoO_2$, $LiNiO_2$, $LiMnO_2$, $LiMn_2O_4$, $Li_xFeO_y$, $Li_xV_yO_z$ and the like. The composite oxides obtained by partial substitution of a lithium composite oxide with other elements include $Li_xCo_yM_zO_2$ (M represents Mn, Ni, V and the like), $Li_xMn_yM_zO_2$ (M represents Li, Ni, Cr, Fe, Co and the like), and the like. The manganese oxides include $\lambda$-$MnO_2$, a composite oxide of $MnO_2$ and $V_2O_5$, a ternary composite oxide $MnO_2 \cdot xV_2O_5$ ($0 < x \leq 0.3$) and the like.

As the negative electrode active material, carbon materials such as hard carbon, soft carbon, graphite, and activated charcoal, metal oxides and metal nitrides such as $SnB_xP_yO_z$, $Nb_2O_5$, $LiTi_xO_y$, $LiFe_xN_y$, and $LiMn_xN_y$, can be used singly or in admixture. Here, the carbon material means a material mainly composed of carbon. The hard carbon means a carbon material which is not graphitized even by heating at 3000 °C, and the soft carbon means a carbon material which is graphitized by heating at 2800 to 3000 °C. The hard carbon can be produced by various methods such as a method using, as a starting material, a furan resin and an organic material obtained by oxygen-crosslinking petroleum pitch having a H/C atomic ratio of 0.6 to 0.8. The soft carbon can be produced by various methods such as a method using, as a starting material, a polymer compound such as coal, polyvinyl chloride resin, polyvinyl acetate or polyvinyl butyral, and pitch.

Among the negative electrode active materials, carbon materials are preferable. When a carbon material is used as the negative electrode active material, a cycle property can be effectively improved. That is, it is preferable that the electrode active material is a carbon material, in the secondary battery electrode of the present invention. Though the reason why a carbon material is preferable as the electrode active material is not definite, it is supposed that, when a carbon material is used, in the first active material layer components including the binder and the polar polymer, a function of holding the electrode active material by the binder becomes effective.

The electrode active material is held by the binder. Listed as the binder are polyvinylidene fluoride (PVDF), polytetrafluoroethylene, a copolymer of vinylidene fluoride and hexafluoropropylene, and the like. Two or more binders may be used. From the viewpoint of improvement of a cycle property, polyvinylidene fluoride, and copolymers of vinylidene fluoride with a compound copolymerizable with vinylidene fluoride are preferred. The compound copolymerizable with vinylidene fluoride includes hexafluoropropylene, tetrafluoroethylene and trifluoroethylene.

The first active material layer components include a first polar polymer. The polar polymer in the present application means a polymer having a polar group. The polar group means a functional group in which, due to difference in electronegativity of atoms constituting a functional group, distribution of electron cloud is polarized and centers of gravity of positive and negative charges do not coincide, thus forming a dipole. Examples of the polar group include an ether group, carboxyl group, sulfone group, phosphate group, formyl group, amino group, amide group, hydroxyl group, cyano group, epoxy group, ester group, carbonate group, lactone group and the like. Examples of the polar polymer include polyethers containing an ether bond in repeating units, polyacrylonitrile, polyvinylene carbonate, polycarbonate, polyester, polymethyl methacrylate and the like. When a polyether is used as the polar polymer, a cycle property can be improved effectively. Depending on occasions, two or more polar polymers may be used in combination.

The polar polymer may be cross-linked by a cross-linkable functional group. When polar polymers are connected in the form of network by a cross-linkable functional group, the mechanical stability of an electrode at higher temperatures is improved. For cross-linking a polar polymer by a cross-linkable functional group, it may be advantageous to supply a polar polymer having a cross-linkable functional group, together with an electrode active material and a binder, onto a collector, followed by driving cross-linking reaction of the polar polymer.

The mass of a binder and first polar polymer included in the first active material layer components is appropriately determined depending on the mass of an electron active material. When the mass of a binder and first polar polymer is too small for the mass of the electron active material, the structure of the active material layer becomes unstable. In contrast, when the mass of a binder and first polar polymer is too large for the mass of the electron active material, reactivity lowers and charge and discharge capacity and power density decrease. In view of these matters, it is preferable that the total mass of the binder and first polar polymer in the first active material layer components is in a range from 5 to 30 wt% based on the mass of the electrode active material.

Regarding the existence ratio of a binder to a first polar polymer in the first active material layer components, when the content of the first polar polymer is too large, holding of an active material by a binder becomes insufficient, causing a possibility of decrease in a cycle property. In contrast, when the content of the first polar polymer is too small, there is a fear that an effect of improving a cycle property by a first polar polymer is not obtained sufficiently. Taking these matters into consideration, it is preferable that the mass of a first polar polymer in the first active material layer components is in a range from 3 to 70 wt% based on the total mass of the first polar polymer and binder.

The first active material layer components may include other compounds. For example, for improving the conductivity of a lithium ion, a lithium salt can be included. Specific examples of the lithium salt include lithium perchlorate ($LiClO_4$), lithium tetrafluoroborate ($LiBF_4$), lithium tetrafluorophosphate ($LiPF_6$), lithium trifluoromethanesulfonate ($LiCF_3SO_3$), Bis(trifluoromethane)sulfonimide lithium salt ($LiN(CF_3SO_2)_2$), Bis(pentafluoroethane)sulfonimide lithium salt ($LiN(CF_3CF_2SO_2)_2$) and the like. The first active material layer components may include conductive materials such as carbon black, graphite, acetylene black and the like.

In voids in the first active material layer, second active material layer components are disposed. The voids in the first active material layer mean regions existing between the first active material layer components and not composed of the first active material layer components. However, the second active material layer components may exist in other regions than the voids in the first active material layer components. For example, the first active material layer components may be coated by the second active material layer components so as not to be seen from outside of the electrode, as shown in FIG. 1.

The second active material layer components include a second polar polymer. The polar polymer included in the second active material layer components is the same as defined in the explanation of the first active material layer components, therefore, an explanation thereof is omitted here. The preferable polar polymers are also the same as described above, therefore, an explanation thereof is also omitted here. The first polar polymer included in the first active material layer components and the second polar polymer included in the second active material layer components may be the same or different. For preventing a problem from occurring at the interface of the first active material layer components and the second active material layer components, it may be advantageous that the polar polymers included in both layer components are the same.

The second active material layer components may contain other compounds. For example, for securing the conductivity of a lithium ion, a lithium salt can be contained. Specific examples of the lithium salt are the same as those listed for the first active material layer components, therefore, a description thereof is omitted here. When the second active material layer components are in the form of gel, a component for maintaining gel condition is mixed in the second active material layer components. For example, an organic solvent as a plasticizer is formulated. As the organic solvent acting as a plasticizer, ethylene carbonate, propylene carbonate, dimethyl carbonate, ethyl methyl carbonate, diethyl carbonate, γ-butyrolactone, methyl formate, methyl acetate, tetrahydrofuran, 1,2-dimethoxyethane and the like are listed. Two or more organic solvents may be used in combination.

For allowing a second polar polymer included in the second active material layer components to cross-link, a polymerization initiator such as azobisisobutyronitrile (AIBN) can be used, if necessary. Though the second active material layer components may include a binder component, for improving a battery property, it is preferable that a binder is included in the first active material layer components, and not in the second active material layer components.

The existence ratio of the first active material layer components to the second active material layer components is not particularly restricted. From the viewpoint of securing the charge and discharge capacity of a battery, it is preferable that the mass of the first active material layer components including an electrode active material is large. Also from the viewpoint of securement of the output of a battery, it is preferable that the mass of the first active material layer components including an electrode active material is large. The active material layer can be formed by, first, applying a slurry on a collector to place first active material layer components, and supplying second active material layer components in voids present in the first active material layer components. By adopting such a production method, a sufficient amount of electrode active material can be placed on a collector, and a secondary battery excellent in charge and discharge capacity and power density is obtained. When first active material layer components are placed by application and drying of a slurry, the resulting first active material layer components have a form partially containing voids produced in drying. In this void, second active material layer components are placed. The amount of the voids is influenced by the concentration of a binder and an electrode active material in a slurry used for formation of the first active material layer components. The concentration may be determined depending on the power density and charge and discharge capacity of the actually resulting secondary battery.

The second embodiment of the present invention provides a method of producing a secondary battery electrode according to the first embodiment of the present invention. That is, the second aspect of the present invention is a method of producing an electrode for a secondary battery having a gel polymer electrolyte, comprising a step of applying a slurry containing an electrode active material, a binder and a first polar polymer on a collector, a step of drying the slurry to obtain an active material layer precursor, a step of supplying a solution containing a second polar polymer into voids in the active material layer precursor, and a step of gelling the solution to obtain an active material layer. The method of producing an electrode of the present invention can produce an electrode excellent in a cycle property, even without laborious treatments such as removal of unnecessary components from the layer once formed, and the like. Namely, the production method of the present invention is relatively excellent in workability. This production method will be illustrated below.

First, an electrode active material, a binder and a first polar polymer, desired to be contained in the first active material layer, and if necessary, other components, are mixed in a solvent to prepare the slurry. The electrode active material, binder, first polar polymer and other components are as explained in the first embodiment of the present invention, therefore, its description is omitted here. As the solvent for the slurry and mixing means, various technologies may be used and there is no specific limitation. For example, as the solvent for the slurry, dimethylformamide, dimethylacetamide, N-methylformamide, N-methyl-2-pyrrolidone (NMP) and the like can be used. When polyvinylidene fluoride is used as the binder, it is preferable to use N-methyl-2-pyrrolidone.

The slurry is applied on a collector. The means of applying the slurry is also not particularly restricted. Application of the slurry can be conducted using means usually used such as a coater and the like.

The slurry applied on the collector is dried. There is no limitation also as to the drying means. The slurry may be dried using the means to be used in producing an electrode. The drying time and drying temperature are determined depending on the amount of the slurry supplied and the evaporation speed of a solvent in the slurry. By drying the slurry, an active material layer precursor is formed on the collector. In the present application, "active material layer precursor" means a member having inside a void, and becoming an active material layer by supplying second active material layer components in this void. That is, by supplying the second active material layer components in the void of the active material layer precursor, an active material layer capable of improving the cycle property of a secondary battery is completed.

Into the void of the first active material layer components, a solution composed of a second polar polymer and, if necessary, other components is supplied. The second polar polymer and other components are as explained for the first embodiment of the present invention, therefore, description thereof is omitted here. The other components and solvent are determined depending on the embodiment of the second active material layer components. When second active material layer components in the form of gel are produced, components suitable for production of second active material layer components in the form of gel are mixed. When second active material layer components in the form of solid are produced, components suitable for production of second active material layer components in the form of solid are mixed. The solvent for the solution is also determined depending on the embodiment of the second active material layer components. For producing the second active material layer components in the form of gel, plasticizers such as ethylene carbonate, propylene carbonate, dimethyl carbonate, ethyl methyl carbonate, diethyl carbonate, $\gamma$-butyrolactone, methyl formate, methyl acetate, tetrahydrofuran, 1,2-dimethoxyethane and the like can be used as a solvent. Two or more solvents may be combined. For producing the second active material layer components in the form of solid, acetonitrile and the like can be used as a solvent.

The means of supplying the solution is not particularly restricted. If the first active material layer components are first formed on a collector, the volume of voids formed in the first active material layer components can be controlled by various conditions, and means of capable of supplying in trace amount such as a coder, applicator and the like are suitably used.

The solution supplied into the voids in the first active material layer components is gelled. The gelling means is also not particularly restricted. For gelling, a technique of removing the solvent using a drier can be simple. The gelling means is selected depending on a compound contained in the solution supplied. For example, when the polar polymer has a cross-linkable functional group, a heat polymerization initiator or a photopolymerization initiator is previously mixed, and the polar polymer is cross-linked by heating or irradiation with light. The drying conditions and cross-linking conditions are determined depending on the supplying amount of the solvent, evaporation speed of the solvent, cross-linking speed and the like. In this way, an active material layer, in which second active material layer components are placed in the voids in the first active material layer components, is obtained.

The active material layer is placed at a desired portion on the surface of a collector, depending on the kind of a battery and a portion of placement of an electrode. When the electrode is used in a bipolar battery, a positive electrode active material layer can be formed on one surface of the collector, and a negative electrode active material layer can be formed on another surface of the collector.

The third embodiment of the present invention is a secondary battery having an electrode according to the first embodiment of the present invention. The electrode of the present invention can be applied to any of a positive electrode, negative electrode and bipolar electrode. A secondary battery containing the electrode of the present invention as at least one electrode belongs to the technological range of the present invention. It is preferable that at least one of a positive electrode, a negative electrode, a positive electrode of a bipolar electrode and a negative electrode of a bipolar electrode is constituted of the electrode of the present invention. By adopting such a constitution, a cycle property can be improved effectively. Both positive electrode and negative electrode may constitute the electrode of the present invention.

FIG. 2 shows one embodiment of a secondary battery. The secondary battery 200 is a secondary battery containing a gel polymer electrolyte. Namely, the secondary battery 200 is a secondary battery using a gel polymer electrolyte as a separator. The positive electrode 212 is composed of a positive electrode collector 202a and a positive electrode active material layer 204a, and the negative electrode 216 is composed of a negative electrode collector 202c and a negative electrode active material layer 204c. For allowing the effect of the present invention of improving a cycle property to be significantly demonstrated, it is preferable that at least the negative electrode is composed of an electrode according to the first embodiment of the present invention and the negative electrode active material is a carbon material.

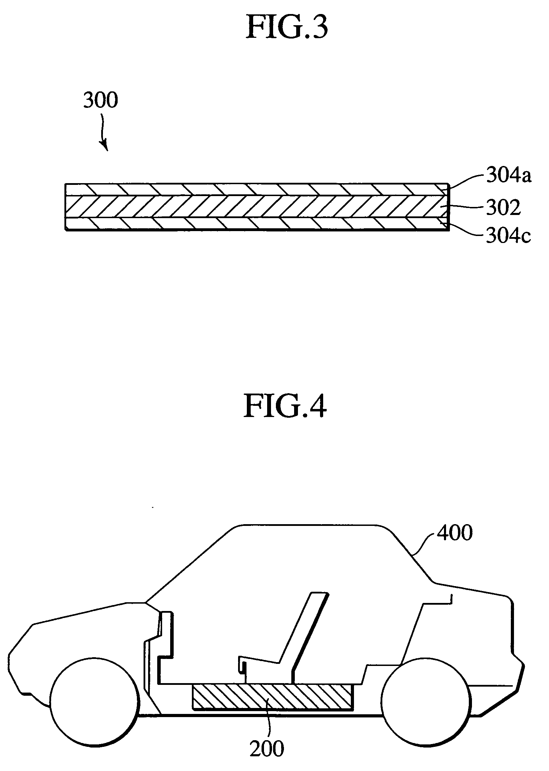

The secondary battery of the present invention can be a bipolar battery. FIG. 3 shows a general bipolar electrode 300. In the bipolar electrode 300, a positive electrode active material layer 304a is placed on one surface of a collector 302, and a negative electrode active material layer 304c is placed on another surface thereof. In other words, it has a structure in which the positive electrode active material layer 304a, the collector 302 and the negative electrode active material layer 304c are laminated in this order. When this bipolar electrode is laminated via a gel polymer electrolyte membrane, a bipolar battery can be constituted. When batteries having usual electrodes are connected in series, a positive electrode collector and a negative electrode collector are electrically connected via a connecting part such as wiring. Such batteries may be convenient in the point of change of design since they can be changed into parallel arrangement only by controlling the connecting part. However, resistance of the connecting part is naturally present though it is small, causing decrease in output. When size reduction of a battery module is taken into consideration, the connecting part is a contradictory factor. Further, a connecting part having no direct relation with power generation necessarily decreases the energy density of the entire battery module including also the connecting part. A bipolar electrode solves such a problem. Namely, since there is no connecting part intervening between electrodes connected in series, decrease in output does not occur by resistance of a connecting part. Since a connecting part is not present, the size of a battery module can be reduced. Further, due to the absence of a connecting part, the energy density of the entire battery module increases.

The fourth embodiment of the present invention is a vehicle having a secondary battery according to the third embodiment of the present invention. FIG. 4 shows a vehicle 400 in which a secondary battery 200 using the electrode of the present invention is mounted. The secondary battery 200 of the present invention has an excellent cycle property. Therefore, when the secondary battery 200 using the electrode of the present invention is used as a power source of a vehicle 400, the charge and discharge capacity of the vehicle 400 can be maintained for a long period of time. Thus, the present invention contributes significantly to improvement in reliability and durability of a vehicle, and can contribute to further generalization of electric vehicles and hybrid vehicles.

The effect of the present invention will be described below with reference to examples and comparative examples.

(Example 1)

· Production of gel polymer electrolyte membrane

First, a mixed solvent composed of propylene carbonate (PC) and ethylene carbonate (EC) containing $LiBF_4$ was prepared at a concentration of 1.0 mol/liter. The volume ratio of PC to EC was 50:50. As the polar polymer, a polyether having cross-linkable functional groups was synthesized according to the method described in *J. Electrochem. Soc.,* 145 (1998) 1521. The polyether and benzyl dimethyl ketal (BDK) as the photopolymerization initiator were added to the mixed solvent, to obtain a gel raw material solution. The mass of the polyether added was 3 wt% based on the total mass of the solvent, and the amount of BDK added was 1000 ppm based on the polar polymer. Non-woven fabric composed of propylene having a thickness of 50 μm was sufficiently impregnated with the resultant gel raw material solution and sandwiched between glass plates. Further, the gel raw material solution was added and the non-woven fabric was fixed and irradiated with ultraviolet ray for 20 minutes, to cross-link the polar polymer. In this way, a gel polymer electrolyte membrane was completed. The following operation was conducted in a glove box under a dry argon atmosphere.

· Production of carbon electrode

A slurry for first active material layer components containing an electrode active material, binder and first polar polymer was first prepared. A carbon material as the electrode active material, a copolymer of vinylidene fluoride and hexafluoropropylene as the binder and the polyether having cross-linkable functional groups as the first polar polymer, were used respectively. As the carbon material, hard carbon having an average particle size of 8 μm was used. Further, the melting point of the copolymer of vinylidene fluoride and hexafluoropropylene measured by differential scanning calorimeter (DSC) was from 140 to 145 °C. The mass ratio of the electrode active material, binder and first polar polymer was 90:5:5. The proportion of the total mass of the binder and first polar polymer based on the total mass of the electrode active material, binder and first polar polymer was 10 wt%. The slurry was stirred for 30 minutes using a homogenizer. As the solvent for the slurry, N-methyl-2-pyrrolidone (NMP) was used. The proportion of the mass of the first polar polymer based on the total mass of the first polar polymer and binder in the first active material layer components was 50 wt%.

The prepared slurry was applied using a coder on a stainless steel foil (SUS 316L, thickness: 20 μm) as a collector. Next, the slurry was dried by heating at 80 °C, to form an active material layer precursor on the surface of the collector. This was cut into about 50 mm x 50 mm, and further dried at about 80 °C for 1 day under high vacuum.

Subsequently, in a glove box under an argon atmosphere, the gel raw material solution was supplied into voids of the active material layer precursor. The gel raw material solution had the same constitution as the gel raw material solution used in preparation of the gel polymer electrolyte membrane except that AIBN as a heat polymerization initiator was used instead of BDK as a photopolymerization initiator. By maintaining the active material layer precursor to which the gel raw material solution had been supplied, at 90 °C for 5 hours in a vessel wound around by a heater, a carbon electrode was completed.

· Production of secondary battery

The carbon electrode as the positive electrode, the gel polymer electrolyte as the electrolyte and a lithium metal foil as the negative electrode, were prepared. The positive electrode was punched out at ϕ = 15 mm, and the gel polymer was punched out at ϕ = 18 mm.

In a glove box under an argon atmosphere, the gel polymer electrolyte was sandwiched between the negative electrode and the positive electrode, to produce a coin cell as a secondary battery. This coin cell was subjected to a charge and discharge test. The charge and discharge conditions are as described below. Charging was conducted under a mode of a constant current of 0.5 C and constant voltage for a total time of 3 hours up to 5 mV, and discharging at constant current was conducted as a discharge rate of 3 C up to a cut off voltage of 3V. The discharge capacity after repetition of charge and discharge for 5 cycles was 92% based on the initial capacity. The results are shown in Table 1.

The negative electrode has relatively sufficiently excess capacity as compared with the positive electrode, and even if the reaction resistance of the negative electrode somewhat increases in charge and discharge, there is no significant influence on the capacity of a battery. Therefore, the capacity of the secondary battery produced here is determined mainly by the condition of the positive electrode.

(Example 2)

A secondary battery was produced according to the procedure in Example 1 except that the mass of the first polar polymer based on the total mass of the first polar polymer and binder was 25 wt%. The discharge capacity after repetition of charge and discharge for 5 cycles was 95% based on the initial capacity. The results are shown in Table 1.

(Example 3)

A secondary battery was produced according to the procedure in Example 1 except that the mass of the first polar polymer based on the total mass of the first polar polymer and binder was 12 wt%. The discharge capacity after repetition of charge and discharge for 5 cycles was 89% based on the initial capacity. The results are shown in Table 1.

(Example 4)

A secondary battery was produced according to the procedure in Example 1 except that the mass of the first polar polymer based on the total mass of the first polar polymer and binder was 5 wt%. The discharge capacity after repetition of charge and discharge for 5 cycles was 85% based on the initial capacity. The results are shown in Table 1.

(Example 5)

A secondary battery was produced using an electrode formed by the following procedure as the positive electrode. As the negative electrode, the carbon electrode was used. The method of producing a gel polymer electrolyte was conducted according to the procedure in Example 1.

A slurry for first active material layer components containing an electrode active material, binder and first polar polymer and conductive material was first prepared. $LiMn_2O_4$ as the electrode active material, a copolymer of vinylidene fluoride and hexafluoropropylene as the binder, the polyether used in Example 1 as the first polar polymer, and acetylene black as the conductive material, were used. The mass ratio of the electrode active material, binder, first polar polymer and conductive material was 85 : 7.5 : 2.5 : 5. The slurry was stirred for 30 minutes using a homogenizer. As the solvent for the slurry, N-methyl-2-pyrrolidone (NMP) was used. Using this slurry, a positive electrode was produced according to the procedure in Example 1.

The carbon electrode as the negative electrode and the gel polymer electrode as the electrolyte were prepared. The negative electrode was punched out at $\phi$ = 15 mm, the gel polymer electrolyte was punched out at $\phi$ = 18 mm. The positive electrode was punched out at $\phi$ = 14 mm.

In a glove box under an argon atmosphere, the gel polymer electrolyte was sandwiched between the negative electrode and the positive electrode, to produce a coin cell as a secondary battery. The capacity ratio per unit area of the battery was controlled so that the ratio of the negative electrode was higher by 30%. This coin cell was subjected to a charge and discharge test. The charge and discharge conditions are as described below. Charging was conducted under a mode of a constant current of 0.5 C and constant voltage for a total time of 3 hours up to 4.2 V, and discharging at constant current was conducted as a discharge rate of 3 C up to a cut off voltage of 2 V. The discharge capacity after repetition of charge and discharge for 5 cycles was 90% based on the initial capacity. The results are shown in Table 1.

(Comparative Example 1)

A secondary battery was produced according to the procedure in Example 1 except that the first polar polymer was not used in production of the first active material layer components. The discharge capacity after repetition of charge and discharge for 5 cycles was 80% based on the initial capacity.

(Comparative Example 2)

A secondary battery was produced according to the procedure in Example 5 except that the first polar polymer was not used in production of the first active material layer components. The discharge capacity after repetition of charge and discharge for 5 cycles was 75% based on the initial capacity.

Table 1

| | First polar polymer / Binder + First polar polymer (%) | Discharge capacity at 5th cycle / Initial capacity (%) |
|---|---|---|
| Example. 1 | 50 | 92 |
| Example. 2 | 25 | 95 |
| Example. 3 | 12 | 89 |
| Example. 4 | 5 | 85 |
| Example. 5 | 0 | 90 |
| Comparative Example. 1 | 25 | 80 |

Table 1   (continued)

|  | First polar polymer<br>――――――――――――――<br>Binder + First polar polymer<br>(%) | Discharge capacity at 5th cycle<br>――――――――――――――――<br>Initial capacity<br>(%) |
|---|---|---|
| Comparative Example. 2 | 0 | 75 |

As shown in Table 1, the secondary battery using the electrode containing the binder and first polar polymer in the first active material layer components is excellent in a cycle property as compared with the secondary battery containing no first polar polymer in the first active material layer components.

The entire content of a Japanese Patent Application No. P2003-18631 with a filing date of January 28, 2003 is herein incorporated by reference.

Although the invention has been described above by reference to certain embodiments of the invention, the invention is not limited to the embodiments described above will occur to these skilled in the art, in light of the teachings. The scope of the invention is defined with reference to the following claims.

**Claims**

1.   A secondary battery electrode, comprising:

a collector (102) ; and
an active material layer (104) formed on the collector (102),
the active material layer (104), comprising:

first active material layer components (106) including an electrode active material (110), a binder and a first polar polymer; and
second active material layer components (108) including a second polar polymer, the second active material layer components (108) being placed in voids between the first active material layer components (106),

wherein the secondary battery electrode (100) is used in a secondary battery (200) having a gel polymer electrolyte (214).

2.   A secondary battery electrode according to claim 1,
wherein the second active material layer components (108) is gel state.

3.   A secondary battery electrode according to claims 1 or 2,
wherein the proportion of the total mass of the binder and the first polar polymer in the first active material layer components (106) is in a range from 5 to 30 wt% based on the mass of the electrode active material (110).

4.   A secondary battery electrode according to any of claims 1 through 3,
wherein the proportion of the mass of the first polar polymer is in a range from 3 to 70 wt% based on the total mass of the first polar polymer and the binder.

5.   A secondary battery electrode according to any of claims 1 through 4,
wherein the binder is polyvinylidene fluoride or a copolymer of vinylidene fluoride with a compound copolymerizable with vinylidene fluoride.

6.   A secondary battery electrode according to any of claims 1 through 5,
wherein the first polar polymer and second polar polymer are polyether cross-linked by a cross-linkable functional group.

7.   A secondary battery electrode according to any of claims 1 through 6,
wherein the electrode active material (110) is a carbon material.

8. A method of producing a secondary battery electrode, comprising:

applying a slurry containing an electrode active material (110), a binder and a first polar polymer on a collector (102) ;

drying the slurry to obtain an active material layer precursor containing the electrode active material (110), the binder and the first polar polymer;

supplying a solution containing a second polar polymer into voids in the active material layer precursor, and gelling the solution,

wherein the secondary battery electrode (100) is used in a secondary battery having a gel polymer electrolyte (214).

9. A secondary battery, comprising:

a secondary battery electrode (100) including a collector (102), and an active material layer (104) formed on the collector (102),

the active material layer (104), comprising:

first active material layer components (106) including an electrode active material (110), a binder and a first polar polymer; and

second active material layer components (108) including a second polar polymer, the second active material layer components (108) being placed in voids between the first active material layer components (106),

wherein the secondary battery electrode (100) is used in a secondary battery having a gel polymer electrolyte (214).

10. A secondary battery according to claim 9,
wherein the secondary battery (200) is a bipolar battery.

11. A vehicle, comprising:

a secondary battery (200) including a secondary battery electrode (100) having a collector (102), and an active material layer (104) formed on the collector (102),

the active material layer (104), comprising:

first active material layer components (106) including an electrode active material (110), a binder and a first polar polymer; and

second active material layer components (108) including a second polar polymer, the second active material layer components (108) being placed in voids between the first active material layer components (106),

wherein the secondary battery electrode (100) is used in a secondary battery (200) having a gel polymer electrolyte (214).

# FIG.1

# FIG.2

# FIG.3

300

304a
302
304c

# FIG.4

400

200

**EP 1 544 935 A1**

## EUROPEAN SEARCH REPORT

Application Number

EP 03 02 8128

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 184 918 A (NISSAN MOTOR) 6 March 2002 (2002-03-06) * the whole document * --- | 1-11 | H01M10/40 H01M4/02 |
| A | WO 02/084764 A (KOBAYASHI TADASHI ;MITSUBISHI MATERIALS CORP (JP); ZHANG SHOUBIN () 24 October 2002 (2002-10-24) * the whole document * -& EP 1 381 097 A (MITSUBISHI MATERIALS) 14 January 2004 (2004-01-14) --- | 1-11 | |
| X | US 6 413 675 B1 (NISHIYAMA TOSHIHIKO ET AL) 2 July 2002 (2002-07-02) * column 5, line 46 - column 6, line 56 * --- | 1-11 | |
| X | US 5 639 573 A (ESCHBACH FLORENCE O ET AL) 17 June 1997 (1997-06-17) * column 4, line 51 - column 5, line 19 * ----- | 1-11 | |

TECHNICAL FIELDS SEARCHED (Int.Cl.7)

H01M

The present search report has been drawn up for all claims

| Place of search | Date of completion of the search | Examiner |
|---|---|---|
| MUNICH | 16 April 2004 | Koessler, J-L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

14

**ANNEX TO THE EUROPEAN SEARCH REPORT
ON EUROPEAN PATENT APPLICATION NO.** EP 03 02 8128

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2004

| Patent document cited in search report | | Publication date | Patent family member(s) | | Publication date |
|---|---|---|---|---|---|
| EP 1184918 | A | 06-03-2002 | EP | 1184918 A2 | 06-03-2002 |
| | | | JP | 2002151055 A | 24-05-2002 |
| | | | US | 2002028380 A1 | 07-03-2002 |
| WO 02084764 | A | 24-10-2002 | JP | 2002313343 A | 25-10-2002 |
| | | | JP | 2002304997 A | 18-10-2002 |
| | | | EP | 1381097 A1 | 14-01-2004 |
| | | | WO | 02084764 A1 | 24-10-2002 |
| | | | JP | 2003173781 A | 20-06-2003 |
| US 6413675 | B1 | 02-07-2002 | JP | 3257516 B2 | 18-02-2002 |
| | | | JP | 2000040527 A | 08-02-2000 |
| US 5639573 | A | 17-06-1997 | US | 5658685 A | 19-08-1997 |
| | | | CA | 2229816 A1 | 06-03-1997 |
| | | | CN | 1216164 A | 05-05-1999 |
| | | | EP | 0846346 A1 | 10-06-1998 |
| | | | JP | 2001503906 T | 21-03-2001 |
| | | | WO | 9708765 A1 | 06-03-1997 |

EPO FORM P0459

For more details about this annex : see Official Journal of the European Patent Office, No. 12/82